# NEW EUROPEAN PATENT SPECIFICATION

(11) **EP 1 887 733 B2**
(45) Date of publication and mention of the opposition decision: **23.01.2013**
(45) Mention of the grant of the patent: 26.08.2009
(21) Application number: 06840597.6
(22) Date of filing: 21.12.2006
(51) Int. Cl.: H04L 12/24

(54) **A METHOD FOR PROCESSING NETWORK RESOURCE, A NETWORK UNIT IN AN INTELLIGENT OPTICAL NETWORK THEREOF**
VERFAHREN ZUR BEARBEITUNG EINES NETZBETRIEBSMITTELS SOWIE NETZEINHEIT EINES ENTSPRECHENDEN INTELLIGENTEN OPTISCHEN NETZES
PROCÉDÉ DE TRAITEMENT D'UNE RESSOURCE DE RÉSEAU ET UNITÉ DE RÉSEAU D'UN RÉSEAU OPTIQUE INTELLIGENT ASSOCIÉ

(30) Priority: 25.01.2006 CN 200610002736
(43) Date of publication of application: 13.02.2008
(73) Proprietor: Huawei Technologies Co., Ltd., Longgang District, Shenzhen Guangdong 518129 (CN)
(72) Inventor: HUANG, Li, Guangdong 518129 (CN); YANG, Yu, Guangdong 518129 (CN); FENG, Junjie, Guangdong 518129 (CN); LUO, Xianlong, Guangdong 518129 (CN); GAO, Jianhua, Guangdong 518129 (CN); SUN, Junbai, Guangdong 518129 (CN)
(74) Representative: Körber, Martin Hans
(86) International application number: PCT/CN2006/003518
(87) International publication number: WO 2007/085173

(56) References cited:
- EP-A2- 1 283 653
- WO-A-2005/125056
- CN-A- 1 592 160
- SYCAMORE NETOWRKS: "Sycamore Netwroks Implementation of the ITU-T G.ASON Control Plane" TECHNICAL BRIEF, [Online] 2003, pages 1-10, XP002499370 Sycamore Networks Retrieved from the Internet: URL:http://www.sycamorenetworks.com/corpor ate/collateral/TB_itut_gason_ControlPlane. pdf> [retrieved on 2008-10-10]
- LE ROUX (FRANCE TELECOM) D BRUNGARD (AT&T) E OKI (NTT) D PAPADIMITRIOU (ALCATEL) K SHIOMOTO (NTT) M VIGOUREUX (ALCATEL) J L: "Evaluation of existing GMPLS Protocols against Multi Layer and Multi Region Networks (MLN/MRN); draft-ietf-ccamp-gmpls-mln-eval-00.txt" STANDARD-WORKING-DRAFT, INTERNET ENGINEERING TASK FORCE, IETF, CH, vol. ccamp, 1 January 2006 (2006-01-01), XP015043612 ISSN: 0000-0004
- SCHUPKE D A ET AL: "Comparison of resilience mechanisms for dynamic services in intelligent optical networks" DESIGN OF RELIABLE COMMUNICATION NETWORKS, 2003. (DRCN 2003). PROCEEDI NGS. FOURTH INTERNATIONAL WORKSHOP ON OCT. 19-22, 2003, PISCATAWAY, NJ, USA,IEEE, 19 October 2003 (2003-10-19), pages 106-113, XP010688057 ISBN: 978-0-7803-8118-6
- REN J. ET AL.: 'Network element management in intelligent optical networks' JOURNAL OF TSINGHUA UNIVERSITY (SCIENCE AND TECHNOLOGY) 31 October 2004, XP008127973

## Description

### Field of the Invention

The present invention relates to a conventional optical transfer network and an intelligent optical network, and particularly, to an intelligent optical network element and methods for processing network resources in a mixed network consisting of conventional optical transfer network elements and intelligent optical network elements.

### Background of the Invention

A conventional optical transfer network such as Synchronous Digital Hierarchy (SDH), Synchronous Optical Network (SONET), or a wavelength exchange network is a centralized management system. In the conventional optical transfer network, the establishment, maintenance and removal of optical connections are performed by human operators. Obviously, such an optical transfer network is unable to meet the demands for dynamic switching and flexibility with the rapid growth of data services.

ITU-T G8080 standard puts forward Automatic Switching Optical Network (ASON) to solve the problem and improve the flexibility of the optical transfer network. A control plane is added into the ASON on a base of the network architecture of the conventional optical transfer network, and an optical connection is automatically established, maintained and removed via the control plane. The automatic establishment of the optical connection includes the following processes.

A, a network element in the ASON obtains links between itself and other network elements via link discovery, and abstracts bandwidth resources for carrying user services in the links into a Traffic Engineering (TE) link.

B, the network element broadcasts its own status, the status and property of the abstracted virtual TE link, and receives the status and property of virtual TE links and status broadcast by other network elements in the ASON via the control plane.

The status of the virtual TE link includes actual connection status, actual alarm status and actual resource occupation status of the virtual TE link, and the property includes the connection, bandwidth, protection type and Multiplex Section Protection (MSP) Ring information of the virtual TE link.

In process B, the control plane utilizes conventional routing protocols, for example an Open Shortest Path First (OSPF) protocol, to flood status and property of the virtual TE link broadcast by each network element to other network elements or a pre-configured Path Computation Element (PCE) device in the ASON.

C, having obtained the status of all network elements, the status and of all virtual TE links in the ASON, the network elements or PCE devices in the ASON may generate a network map describing the topology of the current ASON. The network map includes the information of all network elements, the status and property of all virtual TE links in the ASON.

D, when a network element in the ASON initiates an optical connection, the network element obtains a feasible path according to the network map generated by the network element itself or the PCE devices and a predetermined routing algorithm, and drives the network elements on the path via a conventional signaling protocol to establish crossing connections one by one.

After all the network elements on the path of the optical connection have established crossing connections, the optical connection is completed.

When an optical connection is removed dynamically or the virtual TE link resources are changed due to a failure, the corresponding network element should broadcast the updated network element status, the status and the property of the virtual TE link to the control plane in time. Therefore, the network map generated by each of the network elements or PCE devices in the ASON may be updated synchronously. In the process mentioned above, when a network failure occurs in the ASON, for example a link break or a network element invalidation which causes an interruption in a service, the control plane may protect or restore the service dynamically. Therefore, it may be seen that the network elements in the ASON are intelligent.

As the ASON is gradually applied in a wide range, intelligent ASON elements are deployed in optical transfer networks. However, most of the network elements deployed in the existing optical transfer networks are not intelligent. Therefore, in a long period of time, both intelligent ASON elements and unintelligent conventional optical transfer network elements are utilized in the optical transfer networks.

The document SYCAMORE NETWORKS: "Sycamore Networks Implementation of the ITU-T G.ASON Control Plane" TECHNICAL BRIEF, 2003, pages 1-10, discloses an overview of the control plane behaviour of Sycamore intelligent optical switches in an Automatic Switched Optical Network, ASON, (G.8080/Y.1304) compliant optical transport network. ASON defines logical reference points between domains where signalling and/or routing information is exchanged. The reference point between domains is the Exterior Network Node Interface, E-NNI. Furthermore, it also discloses the implementation of Virtual TE links to identify logical adjacency between the switches. These virtual TE links are only established between intelligent nodes.

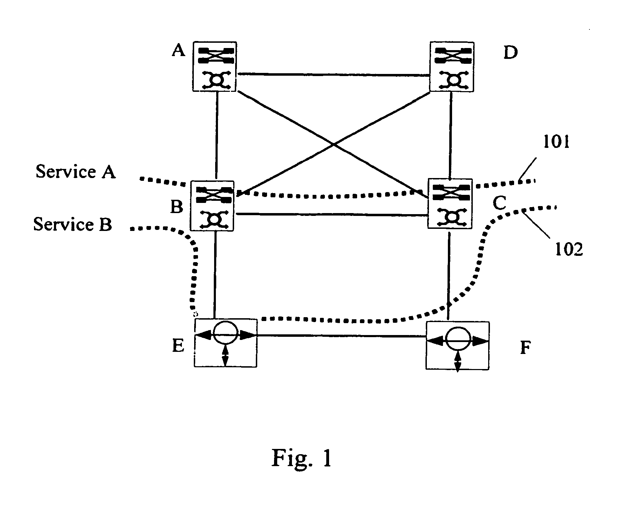

Figure 1 shows a common network structure and service establishing mode at the border of ASON and a conventional optical transfer network in a mixed network including both conventional optical transfer network elements and ASON elements. In Figure 1, Elements A, B, C and D are intelligent ASON elements, and Elements E and F are unintelligent conventional optical transfer network elements. In the network shown in Figure 1, two services such as Service A 101 and Service B 102 are set up. Service A 101 enters the network at Element B and exits the network at Element C without passing through any other element. Service B 102 enters the network at Element B, passes through Elements E and F and exits the network at Element C.

Because conventional optical transfer network elements are unintelligent, they can not automatically establish, maintain and remove optical connections as ASON elements do. Hence the following problems are found in the network shown in Figure 1 which includes both the ASON and the conventional optical transfer network.

First, when the network resources of the ASON are insufficient or special demands are taken into consideration, it is impossible to establish services, or to protect and restore interrupted services with the network resources of the conventional optical transfer network.

In Figure 1, for example, when link resources in the ASON are exhausted and the link between Element B and Element C is broken, Service A 101 is interrupted and the interrupted Service A 101 may not be protected or restored with the link resources from Element B to Element E, from Element E to Element F and from Element F to Element C by the system.

Second, when a failure occurs on a link used by a service in the conventional optical transfer network, the ASON may not learn the failure and initiate a protection or restoration process to protect or restore the service.

In Figure 1, for example, when the link between Element E and Element F through which Service B 102 passes breaks, the network elements in the ASON are unable to learn the broken information and thus unable to initiate the protection or restoration process. As a result, Service B 102 remains interrupted without a way to be protected or restored.

In Figure 1, Elements B, E, F, and C may be configured as an MSP Ring. In such a case, other problems emerge, for example, when a failure occurs on the link between Element B and Element C on the MSP Ring, Service A 101 which is not required to be protected or restored is protected by the MSP Ring. In a conventional method, if a failure occurs on the link between Element B and Element C, it triggers the ASON elements to check the connection status of the MSP Ring and find that the MSP Ring is incomplete. Hence the ASON falsely determines that the MSP Ring is out of service and initiates a protection or restoration process for Service A 101. However, when the link between Element E and Element F and the link between Element B and Element C break, Service B 102 is interrupted and a protection or restoration process is required. But the ASON is unable learn that Service B 102 should be switched to the link between Element B and Element C and thus unable to initiate a protection or restoration process for Service B 102. As a result, Service B 102 remains interrupted and may not be protected or restored.

### Summary

In view of the above, the present invention provides a method for processing network resources which may fully and appropriately utilize network resources of both a conventional optical transfer network and an intelligent optical network and achieve dynamic allocation of network resources.

The method provided by the present invention for processing network resources is suitable for a mixed network including both conventional optical transfer network elements and intelligent optical network elements.

It can be seen that according to the method provided by the embodiment of the present invention, the network resources of the conventional optical transfer network that connects to the intelligent optical network are abstracted into virtual TE links. When the network resources of the intelligent optical network are insufficient or special demands are taken into consideration, the virtual TE links may be allocated dynamically as well as common virtual TE links established in the intelligent optical network, hence services may be set up or maintained with network resources of the conventional optical transfer network.

Further, the network elements on the border of the intelligent optical network and the conventional optical transfer network monitor the status changes of the virtual TE links and broadcast the status changes of the virtual TE links in the intelligent optical network. Therefore the network elements of the intelligent optical network may learn the failures on corresponding optical interfaces of the virtual TE links and on the virtual TE links in time, and take appropriate measures to protect or restore the affected services.

### Brief Description of the Drawings

The accompanying drawings are used for further illustrating the present invention and constitute a part of the application. The description of the accompanying drawings is as follows:
Figure 1 is a schematic diagram of a common network structure and service establishing mode at the border of an ASON and a conventional optical transfer network in a mixed network including both conventional optical transfer network elements and ASON elements.
Figure 2 is a simplified flowchart of a method for processing network resources according to an embodiment of the present invention.
Figure 3 is a schematic diagram illustrating the establishment of a virtual TE link in the network shown in Figure 1 according to an embodiment of the present invention.
Figure 4 is a schematic diagram illustrating the frame format of Type / Length / Value (TLV) according to an embodiment of the present invention.
Figure 5 is a schematic diagram of a network structure and a method for maintaining virtual TE links according to an embodiment of the present invention.
Figure 6 is a schematic diagram illustrating the internal structure of an ASON element according to an embodiment of the present invention.

### Detailed Description of the Invention

The present invention is further described as follows in detail with reference to the accompanying drawings as well as embodiments so as to make the objective, technical solution and merits of the present invention more apparent. The embodiments of the present invention and the description of the embodiment are used for further explaining the present invention.

An embodiment of the present invention provides a method for processing network resources in a mixed network including convention optical transfer network elements and intelligent optical network elements. An intelligent optical network is usually formed with a control plane introduced into a conventional optical transfer network to manage optical connections in an optical network flexibly. The intelligent optical network may include ASON and a General Multi-Protocol Label Switching (GMPLS) network.

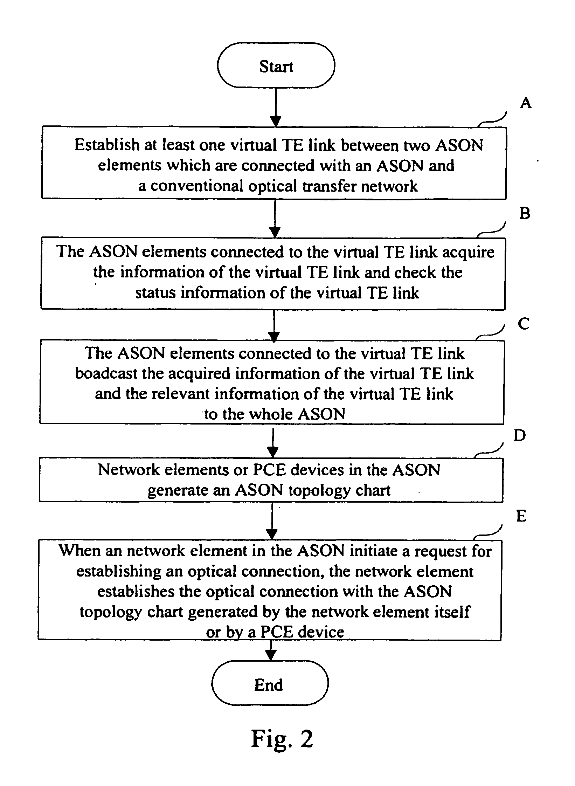

The method provided by the embodiment of the present invention is further described in detail with reference to the mixed network including ASON elements and the conventional optical transfer network elements. Figure 2 shows the process of processing network resources in the mixed network including the ASON elements and the conventional optical transfer network elements. As shown in Figure 2, the method mainly includes the following processes.

A, at least one virtual TE link is established between two ASON elements which are connected to the conventional optical transfer network, the virtual TE link passes through at least one conventional optical transfer network element and connects the two ASON elements.

Each of the virtual TE links is a logic link which passes through at least one conventional optical transfer network element, and both ends of the logic link are the ASON elements. The logic link usually refers to a link logically connected between two network elements. The virtual TE link generally includes, but is not limited to, either of the following two types of links:
a link composed of at least one optical connection that passes through at least one conventional optical transfer network element; and
a link composed of multiple real virtual TE links in series which belong to the conventional optical transfer network and have a common property (e.g. MSP Ring property).

The process of establishing the virtual TE link between the two ASON elements includes establishing the virtual TE link at two optical interfaces through which the two ASON elements connect with the conventional optical transfer network, setting one of the optical interfaces as the remote interface of the virtual TE link configured by the other optical interface, and setting one of the two ASON elements as the remote network element of the virtual TE link configured by the other ASON element.

The virtual TE link between the two ASON elements may include a virtual link established between the optical interfaces through which the ASON elements connect with the conventional optical transfer network for participating in the routing computation.

For this type of virtual TE link, bandwidth resources corresponding to the virtual TE link should be reserved on the conventional optical transfer network element before the establishment of an optical connection with the virtual TE link, and a crossing connection should be established with the reserved bandwidth resource. The bandwidth resource may include the time slot resource, wavelength resource, sub-wavelength resource or wave band resource. The virtual TE link participating in the routing computation may also be used for monitoring failures. It should be noted that the reservation of the bandwidth resources and the establishment of the crossing connection may be implemented before or after the establishment of the virtual TE link, both of the situations are in the protection scope of the present invention.

The virtual TE link between the two ASON elements may further include a virtual TE link established between the optical interfaces through which the ASON elements connect with the conventional optical transfer network for monitoring failures without participating in the routing computation.

As for the establishment of the virtual TE link without participating in the routing computation, the bandwidth resources corresponding to the virtual TE link may or may not be reserved on the conventional optical transfer network element, and the crossing connection may or may not be established either.

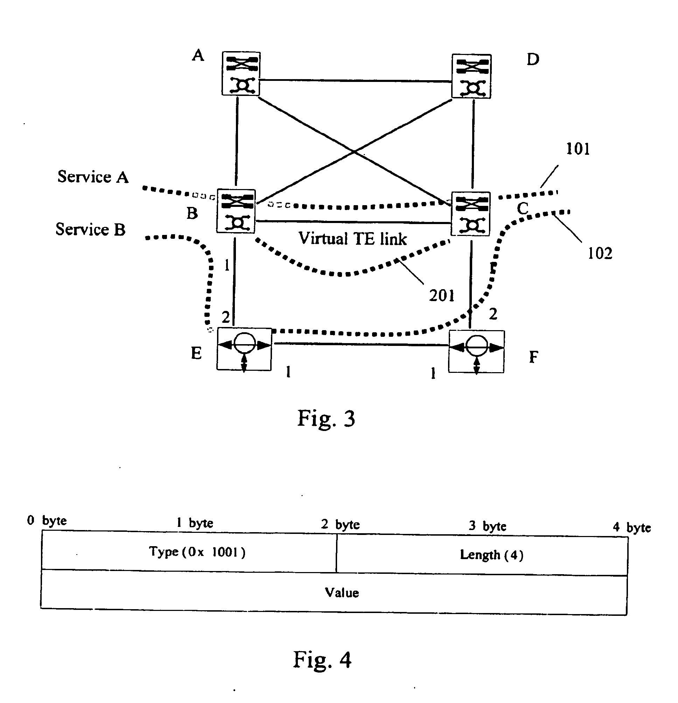

Figure 3 is a schematic diagram illustrating the establishment of a virtual TE link in the network shown in Figure 1 according to an embodiment of the present invention. As shown in Figure 3, the virtual TE link 201 is established between the optical interfaces through which the ASON elements connect with the conventional optical transfer network elements, i.e. between Optical Interface B.1 and Optical Interface C.1. A virtual TE link 201 is shown with the dotted line in Figure 3. If the virtual TE link 201 is configured to participate in routing computation, bandwidth resources corresponding to the virtual TE link should be reserved in the conventional optical transfer network elements and a crossing connection should be established. If the virtual TE link 201 is configured to monitor failures without participating in the routing computation, bandwidth resources corresponding to the virtual TE link are not required to be reserved in the conventional optical transfer network elements and a crossing connection is not required to be established either.

It should be noted that the time slot and bandwidth property of the virtual TE link established by the ASON may be configured flexibly within the value range supported by physical optical interfaces. The time slot and bandwidth property may not be in strict compliance with the type of the physical optical interfaces, and the physical types of the optical interfaces at the two ends of the virtual TE link may be different. In Figure 3, for example, Optical Interfaces B.1 and E.2 are both optical interfaces of 64 VC4 time slots while Optical Interfaces E.1, F.1, F.2 and C.1 are optical interfaces of 16 VC4 time slots. Therefore a virtual TE link with a bandwidth ranging from 1 VC4 to 16 VC4 time slots may be established between Optical Interfaces B.1 and Optical Interfaces C.1.

Further, when an MSP Ring is set up in the conventional optical transfer network, or an MSP Ring crossing the conventional optical transfer network and the ASON is set up on the border of the conventional optical transfer network and the ASON, the configuration information of the MSP Ring in the conventional optical transfer network should be mapped into MSP Ring property information in the virtual TE link property. In other words, the MSP Ring property information in the configured virtual TE link property indicates that the virtual TE link corresponds to a certain part of the MSP Ring.

B, the ASON elements which are connected to the virtual TE link acquires virtual TE link information and checks the status of the virtual TE link.

The virtual TE link information includes the type of the virtual TE link and the property of the virtual TE link. The property of the virtual TE link includes parameters such as link type, bandwidth, protection type and MSP Ring property information.

The status of the virtual TE link includes actual connection status, actual alarm status and actual resource occupation status, etc.

C, the ASON elements that are connected to the virtual TE link broadcast the acquired the virtual TE link information and the relevant status information of the virtual TE link to the whole ASON.

The process of broadcasting the acquired virtual TE link information and the status information of the virtual TE link includes broadcasting, by the ASON elements that are connected to the virtual TE link, the virtual TE link information and the relevant status information of the virtual TE link to the ASON and flooding the virtual TE link information and the relevant status information of the virtual TE link broadcast by the ASON elements to other network elements or PCE devices in the ASON by the ASON via a conventional routing protocol, e.g. the OSPF protocol.

It should be noted that, when the virtual TE link corresponds to the conventional optical transfer network part of an MSP Ring that crosses the ASON and the conventional optical transfer network, the MSP Ring property information in the property of the virtual TE link is flooded to the whole ASON. All the network elements or PCE devices in the ASON keep a complete suit of MSP Ring information combining the MSP Ring configuration information of the links among ASON elements broadcast in the ASON.

When the virtual TE link corresponds to a part of an MSP Ring of the conventional optical transfer network, the MSP Ring property information in the property of the virtual TE link is flooded to the whole ASON. All the network elements or PCE devices in the ASON may also keep a complete set of MSP Ring information combining the MSP Ring configuration information of the virtual TE link that corresponds to the rest part of the MSP Ring. The MSP Ring configuration information is broadcast by the ASON.

In the process of flooding, for the purpose of enabling the ASON elements to distinguish common virtual TE links and the virtual TE link, the OSPF routing protocol for flooding network element information, virtual TE link information and relevant information of the virtual TE link in the ASON is extended in an embodiment of the present invention. The OSPF routing protocol includes a TE link type identification (TLV) defined by regulations of RFC 3630 and RFC 4203, level 2 TLV contained by the link TLV, and a newly-added level 2 sub-TLV belonging to the link TLV, i.e. the TLV. The value field of the TLV indicates whether the virtual TE link described by the link TLV is a common virtual TE link or a virtual TE link. Figure 4 shows the frame format of a TLV according to an embodiment of the present invention. As shown in Figure 4, the frame of the TLV includes a 4-byte TLV header, wherein two bytes are TLV type field with a value of 0x1001, and two bytes are.TLV Length field with value of 4, and the frame of the TLV further includes a 4-byte value field. The value field may be set to 3 possible values:
Value = 0, indicating a common virtual TE link;
Value = 1, indicating a virtual TE link that participates in the routing computation; or
Value = 2, indicating a virtual TE link that monitors failure without participating in routing computation.

Hence the ASON elements or PCE devices may identify whether the virtual TE link is a common virtual TE link or a virtual TE link upon the receipt of the relevant status and property of the virtual TE link according to the level 2 sub-TLV in the link TLV. When the TE link is a virtual TE link, the ASON elements or PCE devices may further identify whether the virtual TE link is a virtual TE link that participates in the routing computation or a virtual TE link that only monitors failures without participating in the routing computation.

D, all elements or PCE devices in the ASON generate a network map describing the present ASON topology, i.e. an ASON topology chart, according to the acquired relevant status and property of the virtual TE link, the information of other network elements, and relevant status and properties of all other common virtual TE links.

The ASON topology chart mainly includes information of all ASON elements, actual connection status, actual alarm status and actual resource occupation status of virtual TE links, and the property of the virtual TE link including link type, bandwidth, protection type and MSP Ring information. The virtual TE links include both common virtual TE links and virtual TE links.

E, when an ASON element initiates an optical connection, the ASON element uses the ASON topology chart generated by the ASON element itself or by a PCE device to obtain a feasible path by combining a predetermined routing algorithm. The path may pass through the established virtual TE link or relate to the established virtual TE link. And then the network elements on the path are driven according to a conventional signaling protocol to establish crossing connections one by one until the optical connection is established.

It can be seen that through Steps A to E, the optical connection may be established automatically in the mixed network of the conventional optical transfer network elements and the ASON elements. Further, because network resources of the conventional optical transfer network that is connected to the ASON are abstracted into virtual TE links. The network resources of the conventional optical transfer network may be utilized to set up services when the network resources of the ASON are insufficient or special demands are taken into consideration.

For the further maintenance of the established optical connection in the mixed network of the conventional optical transfer network elements and the ASON elements, the following processed are performed after process D. The maintenance includes monitoring failures of the established optical connection, protecting and restoring an interrupted service in the case of a connection failure.

The protection includes protecting, when the service with the property of protection is interrupted, the interrupted service by the ASON with backup resources that are allocated in advance for the service, e.g. 1+1 protection.

The restoration includes restoring, when a service with the property of restoration is interrupted, the interrupted service with available network resources by the ASON, e.g. re-routing restoration.

F, the network elements on the border of the ASON and the conventional optical transfer network monitor the status of the virtual TE link and broadcast the status change information of the virtual TE link to the whole ASON in time.

The process of broadcasting is identical with the process of broadcasting in Block C. The process includes broadcasting, by the ASON elements that are connected to the virtual TE link, the relevant status and property of the virtual TE link; flooding the relevant status and property of the virtual TE link to other network elements or PCE devices in the ASON by the ASON with a conventional routing protocol, e.g. the OSPF protocol.

The status change of the virtual TE link includes the status change of the optical interfaces corresponding to the virtual TE link.

In Figure 3, for example, after the virtual TE link 201 has been established between Optical Interfaces B.1 and C.1, when Optical Interface B.1 or C.1 fails, the alarm status of Optical Interface B.1 or C.1 is transmitted to the two ends of the virtual TE link 201. At least one of Elements B and C broadcasts the present status of the virtual TE link 201 to the ASON.

When a failure occurs on a link between two conventional optical transfer network elements, e.g. the link between Network Element E and Network Element F fails, because the link is transparent to the ASON, the network elements on the border of the ASON and the conventional optical transfer network may detect the link break or channel alarm on the link between the conventional optical transfer network elements just when a service is passing through the link. The network elements on the border of the ASON and the conventional optical transfer network broadcast the present status of virtual TE link 201.

For example, in Service B 102 in Figure 3, when a failure occurs on the link between Network Element E and Network Element F, Network Elements B and C on the border of the ASON and the conventional optical transfer network detect the link break alarm or channel alarm from Service B 102. Network Elements B and C locate the failure on the virtual TE link via a channel failure location procedure. And then at least one of Network Element B and Network Element C broadcasts the present status of virtual TE link 201.

G, the ASON determines the connection status of the service based on the influence of the virtual TE link status change on the service and takes appropriate measures.

The measures taken in the processes include:

When a link break alarm or channel alarm is detected on the virtual TE link without configuring an MSP Ring, the status of the virtual TE link is determined to be DOWN and the virtual TE link is unavailable. If a service passing through the virtual TE link has the protection property or restoration property, the ASON initiates a protection or restoration procedure for the service;

When an MSP Ring is set up and a link break alarm or channel alarm is detected on the virtual TE link, it is determined whether the service passing through the MSP Ring has been protected by the MSP Ring with a conventional method. If the service with the protection property or restoration property has not been protected, the ASON initiates a protection or restoration procedure for the service; otherwise, the ASON does not initiate the protection or restoration procedure.

Through process F to process G, the ASON elements may detect a failure on the virtual TE link in time and take corresponding actions to protect or restore the interrupted service.

Methods provided by embodiments of the present invention are explained hereafter with reference to accompanying drawings and embodiments.

Embodiment 1: A method in which a virtual TE link participating in the routing computation is used.

As shown in Figure 3, No. 1 to 16 VC4 time slots of links between Network Element B and Network Element E, Network Element E and Network Element F, and Network Element F and Network Element C are configured as bandwidth resources of a virtual TE link.

In the embodiment, a virtual TE link for monitoring failures and participating in routing computation is established between the Network Elements B and C before the use of the virtual TE link. The method includes the following processes.

Process 101: No. 1 to 16 VC4 time slots on Optical Interfaces B.1 and C.1 are configured as reserved status on Network Elements B and C, and crossing connections of the No. 1 to 16 VC4 time slots between Optical Interfaces E.1 and E.2, Optical Interfaces F.1 and F.2 are established on Network Elements E and F.

Process 102: A virtual TE link is established on Optical Interface B.1 of Network Element B. The No. 1 to 16 VC4 time slots of Optical Interface B.1 are configured as the bandwidth resources of the virtual TE link. Network Element C is configured as the remote network element of the virtual TE link. The index of Optical Interface C.1 is configured as the remote interface index of the virtual TE link, and the type of the TE link is configured as a virtual TE link for monitoring failures and participating in the routing computation.

Process 103: A virtual TE link is established on Optical Interface C.1 of Network Element B. No. 1 to 16 VC4 time slots of Optical Interface C.1 are configured as the bandwidth resources of the virtual TE link. The Network Element B is configured as the remote network element of the virtual TE link. The index of Optical Interface B.1 is configured as the remote interface index of the virtual TE link, and the type of the link is configured as a virtual TE link for monitoring failures and participating in the routing computation.

The following processes are performed after the virtual TE link has been established.

Process 104: Upon having confirmed the virtual TE link established in advance between Network Elements B and C, Network Elements B and C flood the status and property of the virtual TE link to the whole ASON with a routing protocol.

As described above, the status of the virtual TE link includes actual connection status, actual alarm status and actual time slot resource occupation status of the virtual TE link, which are detected by the network elements.

The property of the virtual TE link includes link type, TE link bandwidth, protection type and MSP Ring information, etc.

Process 105: When a service is set up or the service is restored by re-routing, the virtual TE link is utilized in by service routing computation to set up or re-route the service.

The process further includes the following processes. When a signal for setting up Service B 102 reaches Network Element B or C, a crossing connection between a time slot of the reserved No. 1 to 16 VC4 time slots between Optical Interfaces B.1 and C.1 and a time slot of an optical interface of the network element to the ASON is established. Therefore, the ASON regards Service B 102 as having passes through the virtual TE link.

Process 106: In the following process, when a failure occurs on the link between Network Elements B and E, Optical Interface B.1 detects the failure, and Network Element B sets the connection status of the virtual TE link as DOWN and floods the connection status of the virtual TE link to the ASON with a routing protocol. The re-routing restoration for Service B 102 is initiated if Service B 102 has the property of re-routing restoration. In such a case, the virtual TE link in a failure is removed and a service restoration is computed by the service routing computation.

It should be noted that if a failure occurs on the link between Network Elements C and F, a similar procedure is also initiated.

Process 107: When the link break occurs on a link which is not connected to the optical interfaces of the ASON elements on the virtual TE link, the ASON elements connected to the conventional optical transfer network may not detect the failure, e.g., when a failure occurs on the link between Network Elements E and F, neither of Network Elements B and C detects the failure. Because Service B 102 carried by the virtual TE link is interrupted, the network elements on the path of Service B 102 detects a channel failure and the first network element which is set up by Service B 102 initiates a channel alarm failure location procedure and detects that the failure is on the virtual TE link. Hence a re-routing restoration procedure for eliminating the failure on the virtual TE link is initiated to restore Service B 102.

Embodiment 2: When an MSP Ring crossing the ASON and the conventional optical transfer network is set up on the border of the conventional optical transfer network and the ASON, a virtual TE link for monitoring failures without participating in the routing computation is used.

As shown in Figure 3, a 2-fiber bidirectional MSP Ring is set up between Network Elements B and E, Network Elements E and Network Elements F, Network Elements F and C. The information of a part of the MSP Ring, i.e. the information of the part from Optical Interface B.2 to Optical Interface C.2 is included in the ASON, but the information of the part of the MSP Ring from Network Element B to Network Element C through Network Elements E and F is not included. In such a case, the virtual TE link between Optical Interfaces B.1 and C.1 may be established for monitoring failures without participating in the routing computation. The virtual TE link may describe the part of the MSP Ring from Network Element B to Network Element C through Network Elements E and F so that the ASON may obtain an MSP Ring.

In the embodiment, the virtual TE link used for monitoring failures without participating in the routing computation is established between Network Elements B and C before utilizing the virtual TE link. The method includes the following processes.

Process 201: A virtual TE link is established on Optical Interface B.1 of Network Element B. Network Element C is configured as the remote network element of the virtual TE link. The index of Optical Interface C.1 is configured as the remote interface index of the virtual TE link. The type of the link is configured as a virtual TE link for monitoring failures and without participating in the routing computation, and the configuration information of the MSP Ring on Optical Interface B.1 is included in the virtual TE link.

Process 202: Similarly, a virtual TE link is established on Optical Interface C.1 of Network Element C. Network Element B is configured as the remote network element of the virtual TE link. The index of Optical Interface B.1 is configured as the remote interface index of the virtual TE link. The type of the TE link is configured as a virtual TE link for monitoring failures and without participating in the routing computation, and the configuration information of the MSP Ring on Optical Interface C.1 is included in the virtual TE link.

The following processes are performed after the virtual TE link has been established.

Process 203: Having confirmed the virtual TE link established in advance between Network Elements B and C, Network Elements B and C flood the status and property of the virtual TE link to the whole ASON with a routing protocol. The MSP Ring is constituted with the real virtual TE link between Optical interfaces B.2 and C.2 and the virtual TE link between Optical interfaces B.1 and C.1.

Process 204: When a failure occurs on the link between Optical interfaces B.2 and C.2, because the MSP Ring is composed by the real virtual TE link between Optical interfaces B.2 and C.2 and the virtual TE link between Optical interfaces B.1 and C.1, it may be determined that Service A 101 in Figure 3 is protected by the MSP Ring and no more protection or restoration procedure is required for Service A 101. Therefore, falsely initiating protection or restoration procedure for Service A 101 in a conventional method may be effectively avoided.

Process 205: In the following process, when a failure occurs on the link between Network Elements B and E, Optical Interface B.1 detects the failure, and Network Element B sets the connection status of the virtual TE link as DOWN and floods the connection status of the virtual TE link to the ASON with a routing protocol. The ASON may judge that the MSP Ring is out of service and initiate a protection or restoration procession for Service A 101.

Embodiment 3: When an MSP Ring is established in a conventional optical transfer network, a virtual TE link is used.

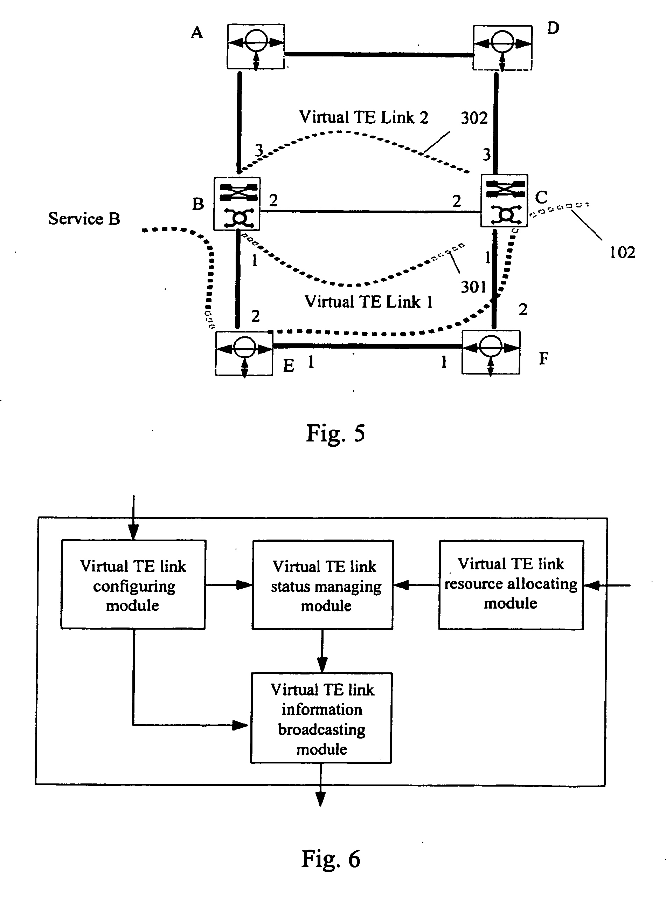

Figure 5 shows a structure of a network described in Embodiment 3 and a method for maintaining virtual TE links. As shown in Figure 5, a 2-fiber bidirectional MSP Ring is established between Network Elements A and B, Network Elements B and E, Network Elements E and F, Network Elements F and C, Network Elements C and D. As shown by the wide solid lines in Figure 5, the MSP Ring passes through two nodes in the ASON, and both of the two halves of the MSP Ring are in the conventional optical transfer network. Network Elements A, D, E and F are conventional optical transfer network elements and Network Elements B and C are ASON elements. Virtual TE link A 301 is established between Optical Interfaces B.1 and C.1 for monitoring failures and participating in routing computation and virtual TE link B 302 for monitoring failures and participating in routing computation, or monitoring failures without participating routing computation is established between Optical Interfaces B.3 and C.3. Hence the ASON may obtain an MSP Ring composed of virtual TE links. In the following description, virtual TE link B 302 is configured as a virtual TE link for monitoring failures and participating routing computation.

In the embodiment, a virtual TE link for monitoring failures and participating in the routing computation is established between the Network Elements B and C before the use of the virtual TE link. The method includes the following processes.

Process 301: A virtual TE link is established on Optical Interface B.1 of Network Element B. Network Element C is configured as the remote network element of the virtual TE link. The index of Optical Interface C.1 is configured as the remote interface index of the virtual TE link. The type of the link is configured as a virtual TE link for monitoring failures and participating in the routing computation, and the configuration information of the MSP Ring on the Optical Interface B.1 is included in the virtual TE link.

Process 302: A virtual TE link is established on Optical Interface C.1 of Network Element C. Network Element B is configured as the remote network element of the virtual TE link. The index of Optical Interface B.1 is configured as the remote interface index of the virtual TE link. The type of the link is configured as a virtual TE link for monitoring failures and participating in the routing computation and the configuration information of the MSP Ring on the Optical Interface C.1 is included in the virtual TE link.

Process 303: A virtual TE link is established on Optical Interface B.3 of Network Element B. Network Element C is configured as the remote network element of the virtual TE link. The index of Optical Interface C.3 is configured as the remote interface index of the virtual TE link. The type of the link is configured as a virtual TE link for monitoring failures and participating in the routing computation, and the configuration information of the MSP Ring on the Optical Interface B.3 is included in the virtual TE link.

Process 304: A virtual TE link is established on Optical Interface C.3 of Network Element C. Network Element B is configured as the remote network element of the virtual TE link. The index of Optical Interface B.3 is configured as the remote interface index of the virtual TE link. The type of the link is configured as a virtual TE link for monitoring failures and participating in the routing computation, and the configuration information of the MSP Ring on the Optical Interface C.3 is included in the virtual TE link.

Process 305: No. 1 to 16 VC4 time slots on Optical Interfaces B.1 and C.1 are configured as reserved status on Network Elements B and C, and crossing connections of No. 1 to 16 VC4 time slots between Optical Interfaces E.1 and E.2 and Optical Interfaces F. 1 and F.2 are established on Network Elements E and F.

Process 306: No. 1 to 16 VC4 time slots on Optical Interfaces B.3 and C.3 are configured as reserved status on Network Elements B and C, and crossing connections of the No. 1 to 16 VC4 time slots between Optical Interfaces A.1 and A.2 and Optical Interfaces D.1 and D.2 are established on Network Elements A and D.

The following processes are performed after the virtual TE link has been established.

Process 307: At least one of Network Element B and Network Element C confirms the virtual TE links established between them, and floods status and property of the virtual TE links to the ASON with a routing protocol. The virtual TE links includes virtual TE link A 301 between Optical Interfaces B.1 and C.1 and virtual TE link B 302 between Optical Interfaces B.3 and C.3. An MSP Ring is composed by the virtual TE link A 301 and the virtual TE link B 302.

Process 308: Service B 102 with the property of re-routing restoration passes through the time slot protected by the MSP Ring on virtual TE link A 301. Service B 102 actually passes through the links between Network Elements B and E, Network Elements E and F, and Network Elements F and C.

Process 309: When a failure occurs on the link between Network Elements B and E, Network Element B floods the information of the link break of virtual TE link A 301 to the ASON. The ASON may determine that Service B 102 is protected by the MSP Ring and a falsely initiated re-routing restoration procedure for Service B 102 may be avoided.

Process 310: In the following process, a failure occurs on the link between Network Elements B and A, Network Element B floods the information of the link break of virtual TE link B 302 to the ASON. The ASON may determine that the MSP Ring is out of service and initiates a re-routing restoration procedure for Service B 102.

It can be seen from the three embodiments above that the present invention establishes at least one virtual TE link which passes through conventional optical transfer network element(s) between two ASON elements. The ASON elements check the status of the virtual TE link and broadcast the status in the ASON. With the method provided by the embodiments of the present invention, the network resources of the conventional optical transfer network may be fully utilized to set up a service when the network resources of the ASON are insufficient, or to protect or restore the interrupted service when a failure occurs.

Another embodiment of the present invention illustrates an ASON element used for performing the fore-going embodiments. Figure 6 is a schematic diagram illustrating the internal structure of an ASON element according to an embodiment of the present invention. As shown in Figure 6, the ASON element mainly includes: a virtual TE link configuring module and a virtual TE link information broadcasting module.

The virtual TE link configuring module is used for establishing at least one virtual TE link which passes through at least one conventional optical transfer network element between two ASON elements which are connected to a conventional optical transfer network, and acquiring the information of the established virtual TE link.

The virtual TE link information broadcasting module is used for broadcasting the information of the established virtual TE link received from the virtual TE link configuring module to other network elements or path computation elements in the network.

The ASON element may further include: a virtual TE link status managing module, used for receiving the information of the virtual TE link from the virtual TE link configuring module, checking physical resources between the conventional optical transfer network and an intelligent optical network which correspond to the virtual TE link according to the received information of the virtual TE link, and determining the status of the virtual TE link.

In such a case, the virtual TE link information broadcasting module is further used for broadcasting the status of the virtual TE link from the virtual TE link status managing module to other network elements or path computation elements in the network.

The ASON element may further include: a virtual TE link resource allocating module used for adjusting the allocation of virtual TE link resources for the connection in local area according to a received connection establishment, connection removal or connection modification request, allocating, releasing or modifying local virtual TE link resources according to the received connection establishment, connection removal or connection modification request, and informing the virtual TE link status managing module of the result of the allocation, release or modification of the virtual TE link resources.

In such a case, the virtual TE link status managing module is further used for updating the information of the status of the virtual TE link based on the result of the allocation, release or modification of the virtual TE link resources received from the virtual TE link resource allocating module.

It should be noted that, though the embodiments are based on the ASON, the method provided by the embodiments of the present invention may be applied to mixed networks of the conventional optical transfer network and other intelligent optical networks, e.g., a GMPLS network. The method for implementing the mixed networks, e.g., a GMPLS network is similar to the method for implementing the mixed network including the conventional optical transfer network and the ASON.

## Claims

1. A method for processing network resources of a mixed network consisting of at least one conventional optical transfer network element (E, F) and at least two Automatic Switching Optical Network, ASON, elements, **characterized by**:
establishing at least one virtual traffic engineering link which passes through the at least one conventional optical transfer network element between the two ASON elements which are connected to the conventional optical transfer network element (A);
acquiring, by one of the two ASON elements, information of the virtual traffic engineering link (B); and
broadcasting the information of the virtual traffic engineering link in an ASON composed of the two ASON elements (C);
wherein acquiring the information of the virtual traffic engineering link comprises acquiring link type and property of the virtual traffic engineering link; and
broadcasting the information of the virtual traffic engineering link comprises broadcasting the link type and the property of the virtual traffic engineering link in the ASON composed of the two ASON elements;
wherein the virtual traffic engineering link corresponds to the conventional optical transfer network part of a Multiplex Section Protection, MSP, Ring that crosses the ASON and the conventional optical transfer network, and
wherein when the MSP Ring is set up, configuration information of the MSP Ring in a conventional optical transfer network is mapped into MSP Ring property information in the property of the virtual traffic engineering link.

2. The method of Claim 1, further comprising:
reserving bandwidth resources corresponding to the virtual traffic engineering link on the conventional optical transfer network element; and
establishing crossing connections with the reserved bandwidth resources; wherein
the virtual traffic engineering link is a type of virtual traffic engineering link participating in routing computation.

3. The method of Claim 1, further comprising:
distinguishing, by network elements in the ASON, ordinary traffic engineering links and virtual traffic engineering links with a newly-added traffic engineering link type identification in an extended Open Shortest Path First OSPF protocol.

4. The method of Claim 3, wherein the traffic engineering link type identification comprises a 4-byte traffic engineering link type identification header and a 4-byte value field for indicating the type of the traffic engineering link,
and the traffic engineering link type identification header comprises a 2-byte traffic engineering link type identification type field and a 2-byte traffic engineering link type identification length field.

## Patentansprüche

1. Verfahren zur Verarbeitung von Netzwerkressourcen eines Mischnetzwerkes, bestehend aus zumindest einem konventionellen optischen Übertragungsnetzwerkelement (E, F) und zumindest zwei Automatic Switching Optical Network-Elementen, ASON-Elementen, **gekennzeichnet durch**:
Aufbauen von zumindest einer technischen Verbindung für virtuellen Datenverkehr, die **durch** das zumindest eine konventionelle optische Übertragungsnetzwerkelement zwischen den zwei ASON-Elementen läuft, die mit dem konventionellen optischen Übertragungsnetzwerkelement (A) verbunden sind;
Erhalten von Daten der technischen Verbindung für virtuellen Datenverkehr (B) durch eines der zwei ASON-Elemente; und
Rundsenden der Daten der technischen Verbindung für virtuellen Datenverkehr in einem ASON, das aus den zwei ASON-Elementen (C) zusammengesetzt ist,
wobei das Erhalten der Daten der technischen Verbindung für virtuellen Datenverkehr Folgendes umfasst: Erhalten einer Verbindungsart und Eigenschaft der technischen Verbindung für virtuellen Datenverkehr; und
das Rundsenden der Daten der technischen Verbindung für virtuellen Datenverkehr Folgendes umfasst:
Rundsenden der Verbindungsart und der Eigenschaft der technischen Verbindung für virtuellen Datenverkehr in dem ASON, das aus den zwei ASON-Elementen zusammengesetzt ist,
wobei die technische Verbindung für virtuellen Datenverkehr dem konventionellen optischen Übertragungsnetzwerkteil eines Multiplier Section Protection-Rings, MSP-Rings entspricht, der das ASON und das konventionelle optische Übertragungsnetzwerk kreuzt, und
wobei, wenn der MSP-Ring errichtet wird, Konfigurationsinformationen des MSP-Rings in einem konventionellen optischen Übertragungsnetzwerk in MSP-Ring-Eigenschaftsinformationen in der Eigenschaft der technischen Verbindung für virtuellen Datenverkehr abgebildet werden.

2. Verfahren nach Anspruch 1, ferner umfassend:
Reservieren von Bandbreitenressourcen, die mit der technischen Verbindung für virtuellen Datenverkehr korrespondieren, auf dem konventionellen optischen Übertragungsnetzwerkelement; und
Aufbauen von Kreuzverbindungen mit den reservierten Bandbreitenressourcen; wobei
die technische Verbindung für virtuellen Datenverkehr eine Art von technischer Verbindung für virtuellen Datenverkehr ist, die an einer Routing-Berechnung beteiligt ist.

3. Verfahren nach Anspruch 1, ferner umfassend:
Unterscheiden durch Netzwerkelemente in dem ASON von technischen Verbindungen für normalen Datenverkehr und technischen Verbindungen für virtuellen Datenverkehr mit einer neu hinzugefügten Typenidentifizierung der technischen Verbindung für Datenverkehr in einem erweiterten Open Shortest Path First Protocol, OSPF-Protokoll.

4. Verfahren nach Anspruch 3, wobei die Typenidentifizierung der technischen Verbindung für Datenverkehr einen 4-Byte-Typenidentifizierungsheader der technischen Verbindung für Datenverkehr und ein 4-Byte-Wertfeld umfasst, um den Typ der technischen Verbindung für Datenverkehr anzuzeigen,
und der Typenidentifizierungsheader der technischen Verbindung für Datenverkehr ein 2-Bytefeld über den Typ der Typenidentifizierung der technischen Verbindung für Datenverkehr und ein 2-Bytefeld für die Länge der Typenidentifizierung der technischen Verbindung für Datenverkehr umfasst.

## Revendications

1. Procédé de traitement de ressources d'un réseau mélangé formé par au moins un élément de réseau de transfert optique classique (E, F) et au moins deux éléments de réseau optique de commutation automatique, ASON, **caractérisé par**
établir au moins une liaison technique de trafic virtuel qui passe à travers le au moins un élément de réseau de transfert optique classique entre les deux éléments ASON qui sont connectés à l'élément de réseau de transfert optique classique (A);
acquérir, par l'un des deux éléments ASON, des informations se rapportant à la liaison technique de trafic virtuel (B); et
diffuser les informations se rapportant à la liaison technique de trafic virtuel dans un ASON constitué des deux éléments ASON (C);
dans lequel l'acquisition des informations se rapportant à la liaison technique de trafic virtuel comprend acquérir le type de liaison et la propriété de la liaison technique de trafic virtuel; et
la diffusion des informations de la liaison technique de trafic virtuel comprend diffuser le type de liaison et la propriété de la liaison technique de trafic virtuel dans l'ASON constitué des deux éléments ASON;
dans lequel la liaison technique de trafic virtuel correspond à la partie de réseau de transfert optique classique d'un cycle de Protection de Section Multiplex, MSP, qui croise l'ASON et le réseau de transfert optique classique, et
dans lequel, lorsque le cycle MSP est établi, l'information de configuration du cycle MSP dans un réseau de transfert optique classique est mappée dans l'information de propriété du cycle MSP dans la propriété de la liaison technique de trafic virtuel.

2. Procédé selon la revendication 1, comprenant en outre:
la réservation de ressources de largeur de bande correspondant à la liaison technique de trafic virtuel sur l'élément de réseau de transfert optique classique; et
l'établissement de connections croisées avec les ressources de largeur de bande réservées; où
la liaison technique de trafic virtuelle est un type de liaison technique de trafic virtuel participant au calcul de routage.

3. Procédé selon la revendication 1, comprenant en outre:
la distinction, par les éléments de réseau dans l'ASON, de liaisons techniques de trafic ordinaire et de liaisons techniques de trafic virtuel avec une identification de type de liaison technique de trafic nouvellement ajoutée dans un protocole étendu Open Shortest Path First OSPF.

4. Procédé selon la revendication 3, dans lequel l'identification du type de liaison technique de trafic comprend une en-tête d'identification de type de liaison technique de trafic 4-octet et un champ de valeur 4-octet pour indiquer le type de liaison technique de trafic,
et l'en-tête d'identification du type de liaison technique de trafic comprend un champ de type d'identification du type de liaison technique de trafic 2-octet et un champ de longueur d'identification du type de liaison technique de trafic 2-octet.
